Europäisches Patentamt

European Patent Office

Office européen des brevets

(11) Publication number: **0 078 883**
**B1**

# EUROPEAN PATENT SPECIFICATION

(45) Date of publication of patent specification: **25.03.87**

(21) Application number: **82105821.1**

(22) Date of filing: **30.06.82**

(51) Int. Cl.⁴: **F 27 B 1/00,** F 27 B 1/04, C 04 B 2/12

(54) **Double-incline shaft kiln.**

(30) Priority: **05.11.81 JP 176432/81**

(43) Date of publication of application:
**18.05.83 Bulletin 83/20**

(45) Publication of the grant of the patent:
**25.03.87 Bulletin 87/13**

(84) Designated Contracting States:
**AT BE CH DE FR GB IT LI SE**

(56) References cited:
**BE-A- 505 574**
**DE-A-2 414 496**
**DE-B-1 558 076**
**DE-B-2 137 723**
**DE-C- 933 197**
**FR-A- 563 117**
**FR-A-2 074 985**
**FR-A-2 201 752**
**US-A-3 658 308**

(73) Proprietor: **NIPPON LIME, LTD.**
**4611-1 Isa, Isa-machi**
**Mine City Yamaguchi Pref. (JP)**

(72) Inventor: **Hiraku, Sonoda**
**1-11-10 Nagasu**
**Chiba 280 (JP)**
Inventor: **Setsuo, Tamura**
**3-7-6 Omiyadai**
**Chiba 280 (JP)**

(74) Representative: **Brown, John David et al**
**FORRESTER & BOEHMERT Widenmayerstrasse**
**4/I**
**D-8000 München 22 (DE)**

Courier Press, Leamington Spa, England.

## Description

The present invention relates to a double-incline shaft kiln in which ore materials are chargeable into a furnace from the top of a vertical external cylinder and are calcined by upper and lower burners installed in upper and lower combustion spaces, resp., of upper and lower calcining zones, resp., the slide surfaces of which are inclined opposite to each other and are both provided with partition walls extending parallel to the side walls thereof.

A double-incline shaft kiln with a partition wall in the calcining zone of the double-incline shaft furnace is described in DE—A—2 414 496.

This shaft kiln already reduces partial or uneven calcination, compared with other inclined shaft kilns, to a certain extent by using the partition walls on the slide surfaces of the calcining zones, but the problem of uneven calcination has not yet been sufficiently overcome, and furthermore, the use of solid fuel still creates the problem of ash from solid fuel mixing with the calcined material.

Therefore, the task of the invention, starting from the prior art according to the DE—A—2 414 496, is to provide an excellent heat recovery ratio, further minimizing partial or uneven calcination and preventing ash of solid fuel from mixing with the calcined material completely.

According to the invention the above object is solved by the teaching that a hot gas generator using solid fuel is provided outside the furnace; that the cooled gas inlet of the hot gas generator consists of an injector which draws gas from a position downstream the lower end of the lower calcining zone slide surface thereby causing hot gas to flow in the lower calcining zone parallel to the flow of the ore material and being additionally supplied with cooling zone gas by an air fan with interconnected cyclone connected to the cooling zone at a position downstream of the injector; and that the hot gas outlet of the hot gas generator delivering hot gas removed of impurities is connected both to the upper and lower combustion spaces.

The present invention will be explained referring to a preferred embodiment shown in the accompanying drawings, in which:

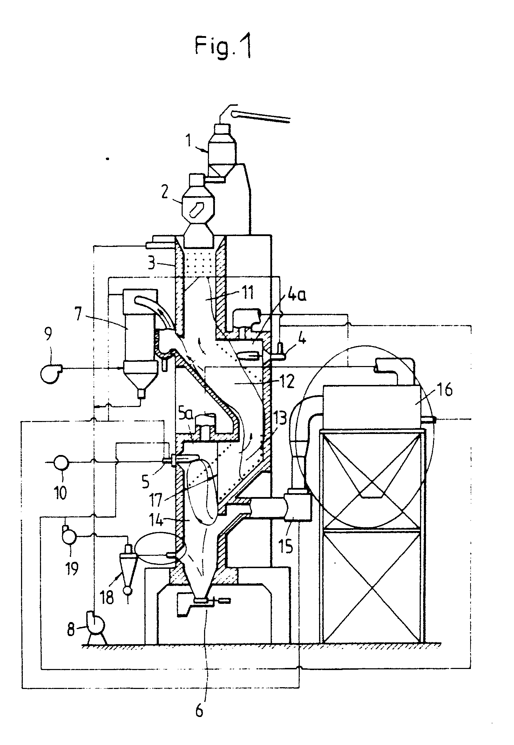

Figure 1 is a vertical cross-sectional front view showing the structure of the double-incline shaft kiln, and

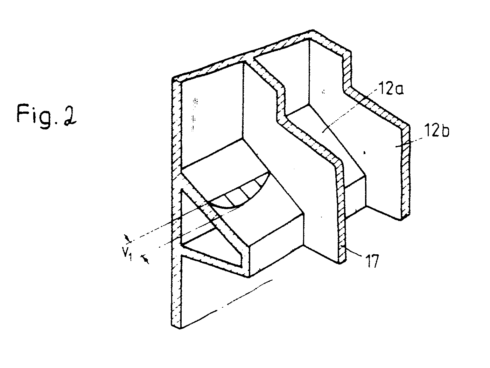

Figure 2 is a perspective view showing the flowing condition of ores.

This embodiment employs a construction in which a center wall 17 is provided to the inclined surface 12a to divide the space in the furnace so as to reduce the velocity variation V of the falling ores over the width of the inclined surface 12a and thereby to minimize partial or uneven calcination of the ores. A hot gas generator 16 supplies the hot gas to the upper and lower combustion spaces 4a and 5a, thereby providing for combustion control and preventing the ash of solid fuel such as coals from mixing with the calcined material. This hot gas generator 16 is supplied with two kinds of hot air for combustion to produce a hot gas at temperature of about 1300°C. That is, the air used to cool the product (calcined material) and a part of the gas burned in the lower combustion space 5a are taken into an injector. This mixture of gasses (800 to 900°C) and a part of the preheated air used to cool the product are led to a cyclone 18 where they are cleared of dust and then supplied to the hot gas generator 16 by the air fan 19.

The ash of the burned solid fuel formed in the hot gas generator 16 is discharged from the bottom of the hot gas generator 16.

A part of the gas burned in the lower combustion space 5a is led in the same direction as the flow of the ore and drawn into the injector 15 so as to increase the length of the calcining zone thus providing a sufficient calcination.

The injector 15 uses the operating air which was delivered from the blower 9 into the recuperator 7 where it was preheated and pressurized to 530°C and 5 kPa.

To improve the heat recovery ratio in the cooling zone 14, a part of the air preheated to 300°C is drawn from the cooling zone 14 into the cyclone 18, where it is released from dust and sent by the combustion air fan 19 to the burners 4 and 5.

. The features of the present invention may be summarized as follows.

The center wall 17 reduces the uneven or nonuniform flow of ores and gas, thereby preventing partial or uneven calcination of ores. The injector 15 provides a hot gas flow parallel to the flow of ore which in turn elongates the calcining zone thereby giving a finish calcination to the ore and assuring a high quality product (calcined material).

Further, since the hot gas generator is provided outside the furnace, solid fuel such as coals can be used to produce a clean hot gas by burning the solid fuel and removing the ash. This construction ensures as high a quality product without impurities like ash at low cost as those obtained using oil or gas fuel.

Moreover, since the preheated air is taken from the intermediate portion from the cooling zone, the heat recovery ratio of the product is high, resulting in the reduction in the product temperature and heat consumption.

## Claim

A double-incline shaft kiln in which ore materials are chargeable into a furnace from the top of a vertical external cylinder (3) and are calcined by upper (4) and lower burners (5) installed in upper (4a) and lower combustion spaces (5a), resp., of upper (12) and lower calcining zones (13), resp., the slide surfaces (12a, 13a) of which are inclined opposite to each other and are both provided with partition walls (17) extending parallel to the side walls (12b, 13b) thereof, characterized in that a hot gas generator (16) using solid fuel is provided outside the furnace;

that the cooled gas inlet of the hot gas generator (16) consists of an injector (15) drawing gas from a position downstream the lower end of the lower calcining zone (13) slide surface (13a) thereby causing hot gas to flow in the lower calcining zone (13) parallel to the flow of the ore material and being additionally supplied with cooling zone (14) gas by an air fan (19) with interconnected cyclone (18) connected to the cooling zone (14) at a position down stream of the injector (15); and that the hot gas outlet of the hot gas generator (16) delivering hot gas removed of impurities is connected both to the upper (4a) and lower combustion spaces (5a).

## Patentanspruch

Doppel-Schrägschachtofen, bei dem mineralische Materialien vom oberen Ende eines vertikalen Außenzylinders (3) in eine Ofenkammer eingebbar sind und durch obere (4) und untere Brenner (5), die in oberen (4a) bzw. unteren Brennräumen (5a) einer oberen (12) bzw. einer unteren Kalzinierzone (13) angeordnet sind, kalziniert werden, wobei die Gleitflächen (12a, 13a) der Kalzinierzonen einander entgegengesetzt geneigt und beide mit Trennwänden (17) versehen sind, die sich parallel zu ihren Seitenwänden (12b, 13b) erstrecken, dadurch gekennzeichnet, daß außerhalb der Ofenkammer ein Heißgasgenerator (16), welcher festen Brennstoff verwendet, vorgesehen ist; daß der Kühlgaseinlaß des Heißgasgenerators (16) aus einem Injektor (15) besteht, welcher Gas von einer Position stromab des unteren Endes der Gleitfläche (13a) der unteren Kalzinierzone (13) abzieht, wodurch in der unteren Kalzinierzone (13) ein Fließen von Heißgas im Gleichstrom zu dem mineralischen Material erzeugt und diese zusätzlich mit Kühlzonengas (14) mittels eines Luftgebläses (19) mit zwischengeschaltetem Zyklon (18) versorgt wird, der an die Kühlzone (14) an einer stromab des Injektors (15) liegenden Stelle verbunden ist; und daß der Heißgasauslaß des Heißgasgenerators (16), welcher von Verunreinigungen befreites Heißgas abgibt, sowohl mit dem oberen (4a) als auch dem unteren Brennraum (5a) verbunden ist.

## Revendication

Four à double cuve inclinée dans lequel des minerals peuvent être chargés dans un four du haut d'un cylindre extérieur vertical (3) et sont calcinés par des brûleurs supérieur (4) et inférieur (5) installés dans des espaces de combustion supérieur (4a) et inférieur (5a), respectivement de zones de calcination supérieure (12) et inférieure (13) dont les surfaces inclinées (12a, 13a) respectives sont inclinées à l'opposé l'une de l'autre et sont toutes deux munies de parois séparatrices (17) s'étendant parallèlement à leurs parois latérales (12b, 13b) caractérisé par le fait qu'un générateur de gaz chaud (16) employant du combustible solide est prévu à l'extérieur du four; que l'entrée de gaz refroidi du générateur de gaz chaud (16) consiste en un injecteur (15) aspirant du gaz d'une position en aval de l'extrémité inférieure de la surface inclinée (13a) de la zone de calcination inférieure (13), amenant ainsi du gaz chaud à circuler dans la zone de calcination inférieure (13) parallèlement au courant de minerai et étant en plus alimenté avec du gaz de la zone de refroidissement (14) par un ventilateur (19) relié à un cyclone (18) connecté à la zone de refroidissement (14) à une position située en aval de l'injecteur (15); et que la sortie du gaz chaud du générateur de gaz chaud (16), débitant du gaz chaud exempt d'impuretés, est connecté à la fois aux espaces de combustion supérieure (4a) et inférieur (5a).

0 078 883

Fig.1

1

Fig. 2